# EUROPÄISCHE PATENTANMELDUNG

(11) **EP 2 522 298 A2**
(43) Veröffentlichungstag der Anmeldung: **14.11.2012**
(21) Anmeldenummer: 12166854.5
(22) Anmeldetag: 04.05.2012
(51) Int. Cl.: A61C 7/12

(54) **Verfahren zum Zusammenstellen eines Satzes von Vorrichtungen für das Korrigieren einer Malokklusion eines Gebisses und so hergestellter Satz**

(30) Priorität: 12.05.2011 DE 102011050325; 12.09.2011 DE 102011053533
(71) Anmelder: Bernhard Förster GmbH, 75172 Pforzheim (DE)
(72) Erfinder:
(74) Vertreter: Twelmeier Mommer & Partner

(57) **Zusammenfassung**

Beschrieben wird ein Verfahren zum Zusammenstellen eines Satzes von Vorrichtungen für das Korrigieren einer Malokklusion eines Gebisses, welcher eine Anzahl von orthodontischen Brackets (2), einen oder mehrere orthodontische Drahtbögen (5) und eine oder mehrere Korrekturschienen zum Aufstecken auf eine Reihe von Zähnen des Unterkiefers und/oder des Oberkiefers enthält, mit folgenden Merkmalen:
für den Unterkiefer und/oder für den Oberkiefer des zu korrigierenden Gebisses wird ein Setup-Modell hergestellt, welches eine Zielokklusion aufweist;
die Lage der orthodontischen Brackets (2) an der lingualen oder bukkalen Oberfläche der Zähne des Setup-Modells wird festgelegt;
für das Positionieren der Brackets (2) in der festgelegten Lage an den Zähnen (10) des Gebisses wird für jedes Bracket (2), für welches die Lage zuvor am Setup-Modell festgelegt wurde, eine Übertragungshilfe (7) angefertigt, welche jeweils einem der Zähne des Setup-Modells formschlüssig angepasst ist und an welcher ein Bracket (2) lösbar angebracht werden kann;
es werden für den Satz ein oder mehrere unterschiedliche, an das Setup-Modell angepasste orthodontische Drahtbögen (5) ausgewählt;
es werden für den Satz eine oder mehrere unterschiedliche, aus Kunststoff bestehende Korrekturschienen angefertigt, welche an die Gestalt und Stellung der Zähne im Setup-Modell angepasst und dazu bestimmt sind, nach den Brackets (2) für eine abschließende Korrektur angewendet zu werden.

## Beschreibung

Die Erfindung betrifft ein Verfahren zum Korrigieren einer Malokklusion eines Gebisses. Eine Malokklusion oder Zahnfehlstellung eines Gebisses kann dadurch korrigiert werden, dass orthodontische Brackets auf die Vorderseite der Zähne geklebt werden und in die Brackets ein orthodontischer Drahtbogen unter Vorspannung eingefügt wird, welcher infolge seiner Vorspannung Kräfte und Momente auf die Zähne ausübt, welche dazu führen, dass die eine Fehlstellung aufweisenden Zähne allmählich aus ihrer Fehlstellung herausbewegt werden und sich einer idealen Zahnstellung annähern. Die Drahtbögen sind im Verlaufe der Behandlung bis zum Erreichen einer als Ziel gewünschten Zahnstellung, vorzugsweise einer idealen Zahnstellung (Idealokklusion), wiederholt auszuwechseln, wozu der Patient wiederholt die Praxis eines die Behandlung durchführenden Kieferorthopäden aufsuchen muss. Die Brackets werden im Mund häufig als störend und ihr Erscheinungsbild als unästhetisch empfunden.

Für Patienten, welche eine Korrektur einer Malokklusion mit sichtbaren Brackets und Drahtbögen nicht akzeptieren wollen oder können, gibt es die Möglichkeit, eine Korrektur mittels Brackets (sogenannte Lingual-Brackets) durchzuführen, welche auf die linguale Oberfläche der Zähne geklebt und durch einen unter Vorspannung stehenden Drahtbogen verbunden werden. Linguale Brackets, welche z. B. in der DE 10 2007 046 383 A1 offenbart sind, werden vor allem von der Zunge als störend empfunden und können Probleme beim Sprechen und beim Beißen verursachen. Außerdem sind lingual angebrachte Brackets schwerer zu reinigen als auf der Vorderseite der Zähne angebrachte Brackets.

Aus der DE 698 18 045 T2, insbesondere Absatz [0015], ist es bekannt, für das Korrigieren einer Malokklusion eine Anzahl von Korrekturschienen anzufertigen, welche aus einem transparenten Kunststoff bestehen, an die Gestalt der Zähne und des Zahnbogens angepasst sind und mit Vorspannung auf eine Reihe von Zähnen (Zahnbogen) gesteckt werden. Die Zahnbewegung, welche mit einer einzelnen solchen Korrekturschiene erreichbar ist, ist so gering, dass eine Vielzahl von unterschiedlichen, individuell angepassten Korrekturschienen angefertigt werden muss, je nach dem Grad der Malokklusion bis zu 70 Schienen, um die ursprüngliche Fehlstellung über viele Zwischenstationen schrittweise in die angestrebte Idealokklusion zu überführen. Das ist zum einen sehr aufwendig und führt zum anderen zu einer langen Behandlungsdauer, welche bei größeren Malokklusionen zwei bis drei Jahre betragen kann.

Der vorliegenden Erfindung liegt die Aufgabe zugrunde, einen Weg aufzuzeigen, wie eine Malokklusion mit kürzerer Behandlungsdauer, als sie bisher mit aus Kunststoff bestehenden Korrekturschienen möglich ist, und mit weniger störenden Einflüssen, als sie bei der Verwendung von Brackets auftreten, korrigiert werden kann.

Diese Aufgabe wird durch ein Verfahren mit den im Anspruch 1 angegebenen Merkmalen gelöst. Eine auf demselben Erfindungsgedanken beruhende weitere Lösung der Aufgabe ist Gegenstand des unabhängigen Anspruchs 2. Vorteilhafte Weiterbildungen der Erfindung sind Gegenstand der Unteransprüche.

Das erfindungsgemäße Verfahren zum Zusammenstellen eines Satzes von Vorrichtungen für das Korrigieren einer Malokklusion eines Gebisse, welcher eine Anzahl von orthodontischen Brackets, einen oder mehrere orthodontische Drahtbögen und eine oder mehrere Korrekturschienen zum Aufstecken auf eine Reihe von Zähnen des Unterkiefers und/oder des Oberkiefers enthält, hat folgende Merkmale:
- Für den Unterkiefer und/oder für den Oberkiefer des zu korrigierenden Gebisses wird ein Setup-Modell hergestellt, welches eine Zielokklusion aufweist;
- die Lage der orthodontischen Brackets an der lingualen oder bukkalen Oberfläche der Zähne des Setup-Modells wird festgelegt;
- für das Positionieren der Brackets in der festgelegten Lage an den Zähnen des Gebisses wird für jedes Bracket, für welches die Lage zuvor am Setup-Modell festgelegt wurde, eine Übertragungshilfe angefertigt, welche jeweils einem der Zähne des Setup-Modells formschlüssig angepasst ist und an welcher ein Bracket lösbar angebracht werden kann;
- es werden für den Satz ein oder mehrere unterschiedliche orthodontische Drahtbögen an das Setup-Modell angepasst bzw. an das Setup-Modell angepasste orthodontische Drahtbögen ausgewählt;
- es werden für den Satz eine oder mehrere unterschiedliche, aus Kunststoff bestehende Korrekturschienen angefertigt, welche an die Gestalt und Stellung der Zähne im Setup-Modell angepasst und dazu bestimmt sind, nach den Brackets für eine abschließende Korrektur angewendet zu werden.

Mit einem erfindungsgemäßen Verfahren kann eine Malokklusion eines Gebisses korrigiert werden, indem zuerst Lingual-Brackets bzw. bukkale Brackets in Kombination mit einem oder mehreren an das Setup-Modell angepassten orthodontischen Drahtbögen eingesetzt werden, welche den größten Teil der Korrektur der Malokklusion bewirken. Danach werden die Lingual-Brackets bzw. die bukkalen Brackets entfernt und eine abschließende Korrektur mit einer oder mehreren Korrekturschienen durchgeführt, welche an die Gestalt und Stellung der Zähne im Setup-Modell angepasst sind. Das ermöglicht wesentliche Vorteile:
- Indem der Korrektur mittels der aus Kunststoff bestehenden Korrekturschiene(n) eine Korrektur mit Hilfe von Lingual-Brackets bzw. bukkalen Brackets vorangestellt wird, lässt sich die Dauer der Korrekturbehandlung verglichen mit der Dauer einer Behandlung, die ausschließlich mit Korrekturschienen vorgenommen wird, drastisch verkürzen.
- Die Korrekturbehandlung mittels Lingual-Brackets bzw. bukkalen Brackets ist für Außenstehende unsichtbar und die Korrekturbehandlung mittels Korrekturschienen, die aus transparentem, zahnfarbenem oder opakem Kunststoff hergestellt werden können, ist für Außenstehende unauffällig.
- Die Dauer, für welche die Lingual-Brackets bzw. die bukkalen Brackets im Mund verbleiben müssen, ist kürzer als bei einer Korrektur einer Malokklusion, welche ausschließlich durch Lingual-Brackets bzw. bukkale Brackets erfolgt, so dass die typischen Unbequemlichkeiten, welche Lingual-Brackets bzw. bukkale Brackets mit sich bringen, vom Patienten nicht so lange ertragen werden müssen wie bei einer ausschließlich mit Lingual-Brackets bzw. mit bukkalen Brackets erfolgenden Korrektur der Malokklusion.
- Da die Korrekturschienen nur für den Abschluss der Behandlung eingesetzt werden, müssen nur eine oder wenige Korrekturschienen hergestellt werden und diese können mit Hilfe des Setup-Modells gewonnen werden, in welchem die Zielokklusion, welche vorzugsweise mit der Idealokklusion übereinstimmt, vorliegt.
- Zahlreiche Korrekturschienen, welche im Stand der Technik für die vielen kleinen Korrekturschritte von der Malokklusion bis zur Zielokklusion benötigt werden und im Stand der Technik nicht unmittelbar vom Setup-Modell abgeformt werden können, sondern unter Nutzung aufwendiger Rechenverfahren oder mit Hilfe zusätzlicher, für Zwischenschritte der Korrektur anzufertigende Setup-Modelle hergestellt werden, sind bei Anwendung der Erfindung entbehrlich.
- Infolgedessen ist nicht nur der zeitliche Aufwand, sondern sind auch der Arbeitsaufwand und der Kostenaufwand für die Korrektur der Malokklusion geringer, als wenn die Korrektur ausschließlich mit Korrekturschienen durchgeführt würde.
- Bei Anwendung der Erfindung ist der Teil der Korrektur, der mit Lingual-Brackets bzw. mit bukkalen Brackets vorgenommen wird, weniger aufwendig als wenn die gesamte Korrektur mit Lingual-Brackets bzw. bukkalen Brackets durchgeführt würde. Insbesondere entfällt die sonst im Stand der Technik erforderliche aufwendige Herstellung des die abschließende Korrektur bewirkenden orthodontischen Drahtbogens, welcher besonders sorgfältig gestaltet werden muss, da er im Stand der Technik bestimmt, wie genau die Zielokklusion erreicht wird. Bei Anwendung der Erfindung ist es jedoch lediglich erforderlich, dass die mittels Lingual-Brackets bzw. bukkalen Brackets erreichte Korrektur in der Nähe der Zielokklusion endet. Die danach noch erforderliche abschließende Korrektur - eine Feinkorrektur- kann durch eine oder wenige Korrekturschienen erfolgen, welche einfach hergestellt werden können, indem sie dem Setup-Modell angepasst werden, welches die Zielokklusion aufweist. Am einfachsten kann die Herstellung dadurch geschehen, dass man eine tiefziehfähige Kunststofffolie nimmt, diese unmittelbar über das Setup-Modell zieht und dadurch entsprechend der Gestalt des Setup-Modells formt.
- Sollte die Korrektur, die nach dem Abschluss der Grobkorrektur mittels der lingualen Brackets bis zum Erreichen der Zielokklusion noch fehlt, nicht durch eine einzige Korrekturschiene erreichbar sein, können auch zwei oder drei Korrekturschienen am Setup-Modell abgeformt werden, welche sich in ihren elastischen Eigenschaften, z. B. in ihrer Härte unterscheiden. In diesem Fall beginnt man die abschließende Korrektur mit jener Korrekturschiene, welche am weichsten ist, und beendet die Korrektur mit der härtesten Korrekturschiene. Die härteste Korrekturschiene ermöglicht die geringste Abweichung der Korrektur von der Zielokklusion, ist aber auf den kleinsten Korrekturweg beschränkt, so dass das Vorschalten von Korrekturen mittels weicherer Schienen zweckmäßig ist.

Die Erfindung eignet sich für die Korrektur einer Malokklusion mit Brackets, welche auf der lingualen oder auf der bukkalen Seite der Zähne befestigt werden, wobei die Korrektur mit Lingual-Brackets besonders bevorzugt ist.

Als Zielokklusion wird zweckmäßigerweise eine Zahnstellung gewählt, welche nahe bei der idealen Zahnstellung (ideale Okklusion) liegt, vorzugsweise die ideale Okklusion selbst. Das Setup-Modell, welches die Zielokklusion wiedergibt, wird üblicherweise so gebildet, dass von dem Kiefer, der die Malokklusion aufweist, ein Abdruck genommen und zur Herstellung eines Gipsmodells verwendet wird, welches die Malokklusion aufweist. In dem Gipsmodell werden die Zähne durch Sägen vereinzelt und in einer kieferorthopädischen Praxis oder in einem zahntechnischen Labor neu ausgerichtet und fixiert. Die Neuausrichtung erfolgt so, dass sie nach Auffassung des Kieferorthopäden oder Zahntechnikers einer idealen Zahnstellung möglichst nahe kommt.

An dem so hergestellten Setup-Modell werden z. B. an der lingualen Seite der Zähne die zum erfindungsgemäßen Satz gehörenden Lingual-Brackets angebracht, z. B. dadurch, dass die Brackets mit Wachs lösbar an den Zähnen des Gipsmodells befestigt werden. Die Brackets haben einen Slot, in welchen ein orthodontischer Drahtbogen einzuführen ist, siehe z. B. die Offenbarung in der DE 10 2007 046 383 A1. Die Brackets werden vorzugsweise so an den Zähnen des Setup-Modells angeordnet, dass die Slots in einer gemeinsamen Ebene liegen, so dass der orthodontische Drahtbogen, welcher in die Brackets einzufügen ist, ein ebenes Gebilde sein kann. Der orthodontische Drahtbogen wird - z. B. ausgehend von einer vorgefertigten Standard-Bogenform - so gebogen, dass er in die am Setup-Modell angebrachten Brackets eingefügt werden kann. Vorzugsweise wird der Drahtbogen so gebogen, dass er ohne mechanische Vorspannung in die Brackets eingefügt werden kann. Soweit der in die Brackets eingefügte Drahtbogen unter mechanischer Vorspannung steht, kann diese durch eine Kaltverformung oder Wärmebehandlung jeglicher Art verringert oder beseitig werden. Der Drahtbogen hat in spannungsfreiem Zustand eine Gestalt, die er im Verlauf der Korrektur der Malokklusion einzunehmen versucht.

Um die Korrektur durchzuführen, müssen die Brackets vom Setup-Modell auf die Zähne im Mund des Patienten übertragen werden. Zu diesem Zweck ist es bekannt, für jedes Bracket eine Übertragungshilfe anzufertigen, welche dem Zahn des Setup-Modells formschlüssig angepasst ist, an welchem sich das Bracket im Setup-Modell befindet. Es ist bekannt, für die Herstellung einer solchen Übertragungshilfe einen Drahtbügel zu verwenden, welcher mit einem Abschnitt im Slot des Brackets liegt. Der Drahtbügel wird so gebogen, dass er über die Zahnkrone greift, auf welcher er durch Kunstharz fixiert wird, welches in pastösem Zustand auf die Zahnkrone aufgebracht wird, den Drahtbügel teilweise einbettet und durch Abbinden des Kunstharzes eine formschlüssig auf der Zahnkrone sitzende Kappe bildet. Wird eine solche Kappe mit dem eingebetteten Drahtbügel und einem daran hängenden Bracket auf die Krone des entsprechenden Zahns im Gebiss des Patienten gesetzt, gelangt das Bracket genau in die gleiche Position, die es auf dem modellierten Zahn im Setup-Modell hatte. In dieser Position kann es nun am Zahn des Patienten festgeklebt werden. Ist das geschehen, kann die Kappe der Übertragungshilfe von der Zahnkrone abgenommen, der Drahtbügel der Übertragungshilfe aus dem Bracket entfernt und die Übertragungshilfe aus dem Mund des Patienten geholt werden.

In alternativer Ausgestaltung kann, angepasst an den jeweiligen Anwendungsfall, eine an sich bekannte Tiefziehschiene oder ein an sich bekannter Silikonschlüssel als Übertragungshilfe eingesetzt werden. Die Platzierung kann rein visuell erfolgen.

Sind auf diese Weise alle Brackets vom Setup-Modell auf die Zähne im Gebiss des Patienten übertragen worden, ist als nächstes ein orthodontischer Drahtbogen in die Brackets einzufügen. Da der Drahtbogen an die Zielokklusion angepasst wurde, das Gebiss des Patienten aber die Malokklusion aufweist, kann der Drahtbogen nur unter Vorspannung in die lingualen oder bukkalen Brackets eingefügt werden. Es ist diese Vorspannung, durch welche die falsch stehenden Zähne aus ihrer Fehlstellung herausbewegt und der Zielokklusion angenähert werden.

Ob für die vorzunehmende Korrektur der Zahnstellung ein einziger orthodontischer Drahtbogen ausreicht, hängt von der Größe der Fehlstellung ab. Ist die Fehlstellung so groß, dass das elastische Rückstellvermögen des orthodontischen Drahtbogens nicht ausreicht, um die Zähne von der Malokklusion in die Nähe der Zielokklusion zu bringen, müssen mehrere orthodontische Drahtbögen nacheinander zur Anwendung kommen, welche in ihrer Gestalt so an die Zielokklusion angepasst sind, dass sie sich den Weg, um den sich die Zähne von ihrer Ausgangsposition in ihre Zielposition bewegen müssen, untereinander teilen. Das kann dadurch erreicht werden, dass orthodontische Drahtbögen mit unterschiedlichen elastischen Eigenschaften verwendet werden, und/oder dadurch, dass orthodontische Drahtbögen verwendet werden, die zwar gleiche elastische Eigenschaften aufweisen können, aber in ihrer spannungsfreien Gestalt unterschiedlich nahe an die Zielokklusion angepasst sind.

Besonders bevorzugt ist die Verwendung superelastischer orthodontischer Drahtbögen, weil diese längere Korrekturwege bei geringer variierenden Rückstellkräften erlauben als ideal-elastische Drahtbögen. Superelastische orthodontische Drahtbögen bestehen meistens aus einer Legierung, welche ungefähr zur Hälfte aus Nickel und zur anderen Hälfte aus Titan besteht.

Wenn mit Hilfe der lingualen Brackets eine Korrektur der Malokklusion bis in die Nähe der Zielokklusion stattgefunden hat, werden die Brackets und der sie verbindende orthodontische Drahtbogen entfernt und stattdessen eine Korrekturschiene, welche an die Gestalt und Stellung der Zähne im Setup-Modell und damit an die Zielokklusion angepasst ist, auf den zu korrigierenden Zahnbogen gesteckt. Diese Korrekturschiene besteht zweckmäßigerweise aus einem farblosen oder zahnfarbenen oder opaken Kunststoff, so dass sie sich möglichst wenig vom Erscheinungsbild der Zähne abhebt. Sie kann durch ein Tiefziehverfahren hergestellt sein, indem eine tiefziehfähige Kunststofffolie über die Zähne des Setup-Modells gezogen wurde. Es ist aber auch möglich, das Setup-Modell mittels eines Scanners abzutasten und auf diese Weise ein Bild des Setup-Modells zu erzeugen, welches in Form eines digitalen Datensatzes in einem Rechner gespeichert wird, vergleiche die DE 698 18 045 T2. Mit diesem Datensatz kann entweder das Setup-Modell oder die Korrekturschiene durch ein Verfahren des Rapid Prototyping hergestellt werden, z. B. durch Stereolithographie oder durch einen 3D-Drucker.

Die eng an das Setup-Modell angepasste Korrekturschiene wird, wenn sie auf den schon weitgehend korrigierten Zahnbogen gesteckt wird, verformt und die dabei auftretenden Rückstellkräfte wirken auf die Zähne ein, um mit dem Abbau der Rückstellkräfte die Zielokklusion zu erreichen. Sollte das mit einer einzigen Korrekturschiene noch nicht ganz erreicht werden, dann ist es vorteilhaft, einige wenige Korrekturschienen, vorzugsweise nicht mehr als drei verschiedene Korrekturschienen, in dem erfindungsgemäßen Satz zu haben. Diese können alle der Zielokklusion angepasst sein, wenn sie unterschiedliche elastische oder elastomere Eigenschaften haben, insbesondere unterschiedlich hart oder unterschiedlich steif sind, z. B. dadurch, dass sie unterschiedlich dick sind und sich deshalb in ihrer Fähigkeit unterscheiden, die noch nicht ideal stehenden Zähne zu bewegen. Wenn mehrere Korrekturschienen zur Anwendung kommen, dann vorzugsweise so, dass die weichste Korrekturschiene zuerst und die härteste Korrekturschiene zuletzt zur Anwendung gelangen. Mit der härtesten Korrekturschiene kann man die Zielokklusion am genauesten erreichen.

Da die aus Kunststoff hergestellten Korrekturschienen die Korrektur der Zahnstellung in wesentlich kleineren Schritten bewirken als Lingual-Brackets oder bukkale Brackets mit orthodontischen Drahtbögen, insbesondere mit superelastischen orthodontischen Drahtbögen, kann eine Korrekturschiene, welche dem Setup-Modell, welches die Zielokklusion verkörpert, engt angepasst ist, im Regelfall nicht auf eine Zahnreihe des unkorrigierten Gebisses gesteckt werden. Das ist so gewollt, weil der erfindungsgemäße Satz dazu bestimmt ist, dass zunächst mittels Lingual-Brackets oder bukkalen Brackets und orthodontischen Drahtbögen der größte Teil der Korrektur (Grobkorrektur) bewirkt wird, wohingegen mit einer oder wenigen Korrekturschienen danach nur noch eine kleinere abschließende Korrektur (Feinkorrektur) durchgeführt werden soll. Die Tatsache, dass mit den Lingual-Brackets bzw. mit den bukkalen Brackets und mit den orthodontischen Drahtbögen nur eine Grobkorrektur der Zahnstellung vorgenommen werden soll, erleichtert das Arbeiten mit den Lingual-Brackets bzw. mit den bukkalen Brackets und mit den orthodontischen Drahtbögen ganz erheblich, weil die Feinkorrektur bequem mit einer oder wenigen Korrekturschienen erreicht wird, die eng an die Zielokklusion angepasst sind. Die Grobkorrektur mit Lingual-Brackets bzw. mit bukkalen Brackets und orthodontischen Drahtbögen kann sogar mit einem Standard-Drahtbogen beginnen, der nicht individuell an das Setup-Modell angepasst ist, denn auch mit einem solchen Standard-Drahtbogen kann bereits eine Korrektur ausgelöst werden, welche grob in die richtige Richtung geht.

Die Erfindung wird nachfolgend anhand der beigefügten Zeichnungen weiter erläutert.
Figur 1 zeigt eine Draufsicht auf ein Setup-Modell, welches die Zähne in einer Stellung entsprechend einer Zielokklusion zeigt,
Figur 2 zeigt einen orthodontischen Drahtbogen in einer Standardform,
Figur 3 zeigt einen orthodontischen Drahtbogen in einer anderen Standardform,
Figur 4 zeigt einen orthodontischen Drahtbogen wie in Figur 3, jedoch angepasst an die Zielokklusion in Figur 1,
Figur 5 zeigt einen Ausschnitt aus dem Setup in Figur 1, wobei beispielhaft an einem Zahn ein linguales Bracket angebracht ist,
Figur 6 zeigt den Ausschnitt aus Figur 5, in welchem das linguale Bracket um eine Übertragungshilfe ergänzt ist,
Figur 7 zeigt einen Ausschnitt aus einem zu behandelnden Zahnbogen mit einer deutlichen Zahnfehlstellung, und
Figur 8 zeigt in einer Schrägansicht eine aus einem Kunststoff geformte Korrekturschiene.

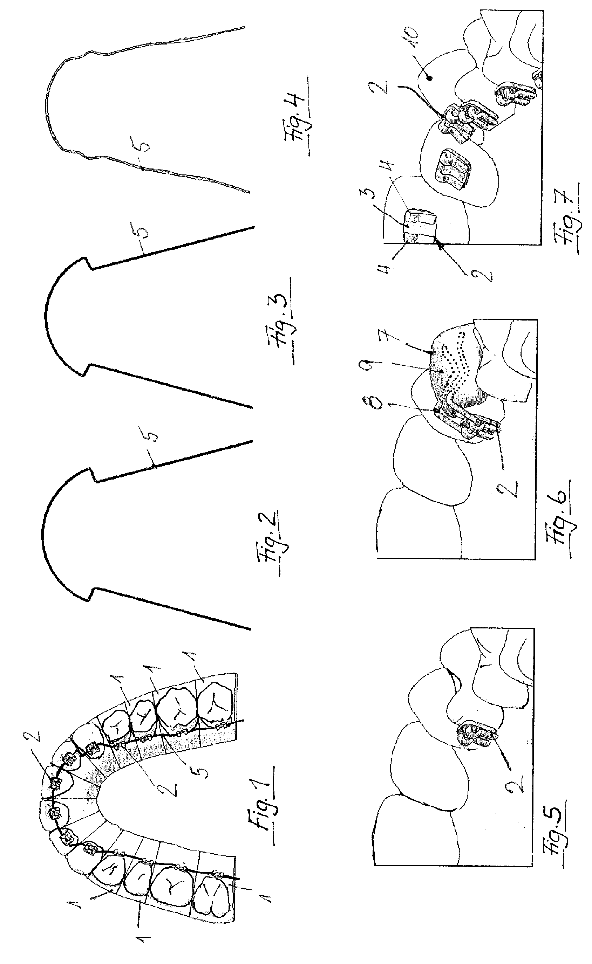

Figur 1 zeigt schematisch ein Setup-Modell von einem vollständigen Zahnbogen. Das Setup-Modell ist durch zwischen je zwei Zähne gelegte Trennschnitte in Segmente 1 unterteilt, welche es erlauben, die Zähne im Modell ideal auszurichten bzw. eine der idealen Zahnstellung nahekommende Zielokklusion zu erreichen. Auf der lingualen Seite eines jeden Zahns ist ein Bracket 2 befestigt, vorzugsweise mit Wachs, so dass die Brackets ohne Schaden zu nehmen wieder entfernt werden können.

Die Figuren 5 bis 7 zeigen die Brackets 2 vergrößert. Jedes Bracket 2 hat ein auch als Pad 3 bezeichnetes Fußteil, mit welchem es auf die linguale Seite des Zahns geklebt ist. Auf die Oberseite des Pads 3 sind zwei Bügel 4 geschweißt, unter welchen ein orthodontischer Drahtbogen 5 gehalten werden kann. Ein solcher Drahtbogen 5 ist in Figur 4 dargestellt. Er ist aus einem Standard-Drahtbogen, wie er in Figur 3 dargestellt ist, durch Biegen gebildet worden. Die Biegungen wurden so vorgenommen, dass der Drahtbogen 5 nach dem Einfügen in die Brackets 2 des Setup-Modells, wie in Figur 1 dargestellt, im wesentlichen frei von mechanischen Spannungen ist.

Um die Malokklusion zu korrigieren, müssen die Brackets in der selben Position, in welcher sie an den Zähnen des Setup-Modells angebracht sind, auf die entsprechenden Zähne im Mund des Patienten übertragen werden. Zu diesem Zweck werden individuelle Übertragungshilfen 7 hergestellt, von denen eine in Figur 6 dargestellt ist. Sie wird hergestellt, indem in ein linguales Bracket 2 ein Drahtbügel 8 eingefügt wird, siehe Figur 6, dessen vom Bracket 2 ausgehende Schenkel so gebogen werden, dass sie der Kontur der Zahnkrone anliegen. Danach wird ein Kunstharz in pastöser Form auf die Zahnkrone aufgetragen, welche die Schenkel des Drahtbügels 8 einbettet und nach dem Erhärten auf der Zahnkrone eine Kappe 9 bildet. Nach dem Erhärten der Kappe 9 kann das Bracket 2 zusammen mit der Kappe 9 und dem eingebetteten Drahtbügel 8 vom Zahn abgehoben und auf dem entsprechenden Zahn 10 im Mund des Patienten positioniert und an der lingualen Seite des Zahns 10 festgeklebt werden. Danach kann die Kappe 9 vom Zahn 10 abgehoben und der Drahtbügel 8 aus dem Bracket 2 entfernt werden. Auf diese Weise werden der Reihe nach alle Brackets 2 von den Zähnen des Setup-Modells auf die Zähne im Mund des Patienten übertragen. Das Ergebnis zeigt ausschnittweise die Figur 7.

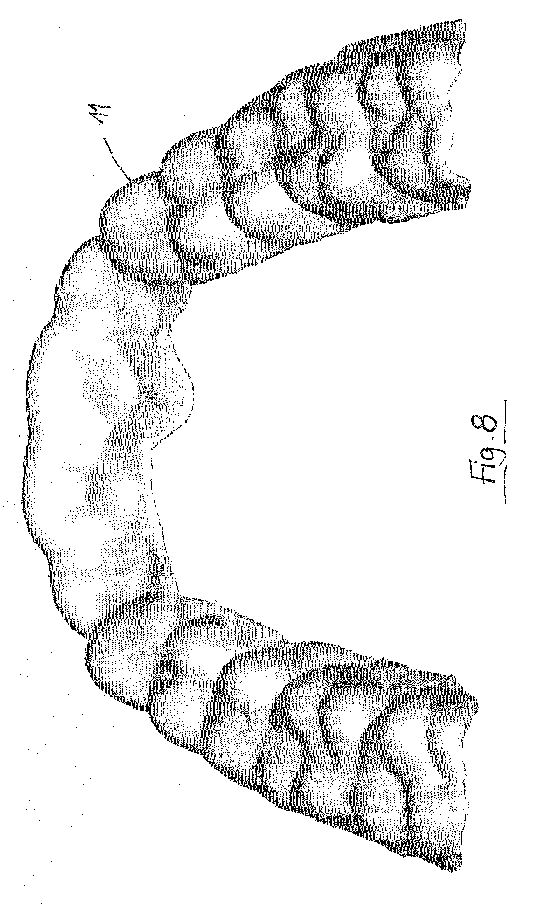

In die so positionierten Brackets 2 wird nun der an das Setup-Modell angepasste orthodontische Drahtbogen 5 (Figur 4) eingefügt. Da der Verlauf der Brackets 2 im Mund des Patienten (Figur 7) ein anderer ist als im Setup-Modell (Figur 1), wird er beim Einfügen in die Brackets 2 im Mund des Patienten elastisch verformt. Die dabei auftretenden Rückstellkräfte bewegen die Zähne allmählich in Richtung auf die gewünschte Zielokklusion. Diese wird durch die Korrektur mit den lingualen Brackets 2 und mit den orthodontischen Drahtbögen 5 nicht vollständig erreicht. Die abschließende Korrektur erfolgt erfindungsgemäß mit Hilfe einer aus Kunststoff geformten Korrekturschiene 11 (Figur 8), welche vom Setup-Modell abgeformt ist, z. B. durch ein Tiefziehverfahren. Die Korrekturschiene 11 wird auf den schon weitgehend korrigierten Zahnbogen aufgesteckt. Da die Korrekturschiene 11 die Zielokklusion wiedergibt, der Zahnbogen im Mund des Patienten die Zielokklusion aber noch nicht vollständig erreicht hat, wird die Korrekturschiene 11 etwas verformt und die dabei auftretenden Rückstellkräfte bewegen die noch falsch stehenden Zähne nun in die Zielokklusion und schließen die Korrektur damit ab.

### Bezugszahlenliste:

- 1.: Segmente des Setup-Modells
- 2.: Bracket
- 3.: Pad
- 4.: Bügel
- 5.: Drahtbogen
- 6.: ---
- 7.: Übertragungshilfen
- 8.: Drahtbügel
- 9.: Kappe
- 10.: Zahn
- 11.: Korrekturschiene

## Patentansprüche

1. Verfahren zum Zusammenstellen eines Satzes von Vorrichtungen für das Korrigieren einer Malokklusion eines Gebisses, welcher eine Anzahl von orthodontischen Brackets (2), einen oder mehrere orthodontische Drahtbögen (5) und eine oder mehrere Korrekturschienen (11) zum Aufstecken auf eine Reihe von Zähnen (10) des Unterkiefers und/oder des Oberkiefers enthält, mit folgenden Merkmalen:
- für den Unterkiefer und/oder für den Oberkiefer des zu korrigierenden Gebisses wird ein Setup-Modell hergestellt, welches eine Zielokklusion aufweist;
- die Lage der orthodontischen Brackets (2)an der lingualen oder bukkalen Oberfläche der Zähne des Setup-Modells wird festgelegt;
- für das Positionieren der Brackets (2) in der festgelegten Lage an den Zähnen (10) des Gebisses wird für jedes Bracket (2), für welches die Lage zuvor am Setup-Modell festgelegt wurde, eine Übertragungshilfe (7) angefertigt, welche jeweils einem der Zähne des Setup-Modells formschlüssig angepasst ist und an welcher ein Bracket (2) lösbar angebracht werden kann;
- es werden für den Satz ein oder mehrere unterschiedliche, an das Setup-Modell angepasste orthodontische Drahtbögen (5) ausgewählt;
- es werden für den Satz eine oder mehrere unterschiedliche, aus Kunststoff bestehende Korrekturschienen (11) angefertigt, welche an die Gestalt und Stellung der Zähne im Setup-Modell angepasst und dazu bestimmt sind, nach den Brackets (2) für eine abschließende Korrektur angewendet zu werden.

2. Verfahren zum Herstellen eines Satzes von Vorrichtungen für das Korrigieren einer Malokklusion eines Gebisses, welcher eine Anzahl von orthodontischen Brackets (2), einen oder mehrere orthodontische Drahtbögen (5) und eine oder mehrere Korrekturschienen (11) zum Aufstecken auf eine Reihe von Zähnen (10) des Unterkiefers und/oder des Oberkiefers enthält, mit folgenden Merkmalen:
- für den Unterkiefer und/oder für den Oberkiefer des zu korrigierenden Gebisses wird ein Setup-Modell hergestellt, welches eine Zielokklusion aufweist;
- die Lage der orthodontischen Brackets (2) an der lingualen oder bukkalen Oberfläche der Zähne des Setup-Modells wird festgelegt;
- für das Positionieren der Brackets (2) in der festgelegten Lage an den Zähnen des Gebisses wird für jedes Bracket (2), für welches die Lage zuvor am Setup-Modell festgelegt wurde, eine Übertragungshilfe (7) angefertigt, welche jeweils einem der Zähne des Setup-Modells formschlüssig angepasst ist und an welcher ein Bracket (2) lösbar angebracht werden kann;
- es werden für den Satz ein oder mehrere unterschiedliche orthodontische Drahtbögen (5) an das Setup-Modell angepasst;
- es werden für den Satz eine oder mehrere unterschiedliche, aus Kunststoff bestehende Korrekturschienen (11) angefertigt, welche an die Gestalt und Stellung der Zähne im Setup-Modell angepasst und dazu bestimmt sind, nach den Brackets (2) für eine abschließende Korrektur angewendet zu werden.

3. Verfahren nach Anspruch 1 oder 2, **dadurch gekennzeichnet, dass** als Zielokklusion die ideale Zahnstellung (ideale Okklusion) gewählt wird.

4. Verfahren nach einem der vorstehenden Ansprüche, **dadurch gekennzeichnet, dass** eine Übertragungshilfe (7) angefertigt wird, welche eine auf den jeweiligen Zahn (10) zu steckende Kappe (9) aufweist, in welche ein Drahtbügel (8) eingebettet ist, welcher mit einem in das Bracket (2) einzufügenden Abschnitt aus der Kappe (9) herausragt.

5. Verfahren nach einem der vorstehenden Ansprüche, **dadurch gekennzeichnet, dass** die orthodontischen Drahtbögen (5) so ausgewählt werden, dass sie sich in ihrer Härte unterscheiden.

6. Verfahren nach einem der vorstehenden Ansprüche, **dadurch gekennzeichnet, dass** die orthodontischen Drahtbögen (5) so ausgewählt werden, dass sie sich in ihrer Gestalt in der Weise unterscheiden und - wenn sie in die positionierten Brackets (2) eingefügt sind - in unterschiedlichen Zwischenstationen zwischen der ursprünglich vorhandene Malokklusion und der Zielokklusion ihren entspannten Zustand einnehmen.

7. Verfahren nach einem der vorstehenden Ansprüche, **dadurch gekennzeichnet, dass** die orthodontischen Drahtbögen (5) dadurch an das Setup-Modell angepasst werden, dass sie in einen der festgelegten Lage der Brackets (2) folgenden Verlauf gebogen und in dieser gebogenen Gestalt spannungsfrei geglüht werden.

8. Verfahren nach einem der vorstehenden Ansprüche, **dadurch gekennzeichnet, dass** für den Satz orthodontische Drahtbögen (5) aus einer superelastischen Legierung ausgewählt werden.

9. Verfahren nach einem der vorstehenden Ansprüche, **dadurch gekennzeichnet, dass** für den Satz Korrekturschienen (11) angefertigt werden, welche sich in ihrer Härte unterscheiden.

10. Verfahren nach einem der vorstehenden Ansprüche, **dadurch gekennzeichnet, dass** für den Satz Korrekturschienen (11) angefertigt werden, welche sich in ihrer Steifigkeit unterscheiden.

11. Verfahren nach einem der vorstehenden Ansprüche, **dadurch gekennzeichnet, dass** für den Satz Korrekturschienen (11) angefertigt werden, welche aus einem farblosen oder zahnfarbenen oder opaken Kunststoff bestehen.

12. Verfahren nach einem der vorstehenden Ansprüche, **dadurch gekennzeichnet, dass** die Korrekturschienen (11) durch ein Tiefziehverfahren hergestellt werden, indem eine Kunststofffolie über die Zähne des Setup-Modells gezogen wird.

13. Verfahren nach einem der vorstehenden Ansprüche, **dadurch gekennzeichnet, dass** die Korrekturschienen (11) dem Setup-Modell mit der Zielokklusion so eng angepasst sind, dass sie nur für den letzten bis höchstens für den drittletzten Korrekturschritt auf eine Zahnreihe des bereits teilweise korrigierten Gebisses passen.

14. Verfahren nach einem der vorstehenden Ansprüche, **dadurch gekennzeichnet, dass** die Korrekturschienen (11) dem Setup-Modell mit der Zielokklusion so eng angepasst sind, dass sie nur für den letzten bis höchstens für den vorletzten Korrekturschritt auf eine Zahnreihe des bereits teilweise korrigierten Gebisses passen.

15. Verfahren nach einem der vorstehenden Ansprüche, **dadurch gekennzeichnet, dass** die Korrekturschienen (11) dem Setup-Modell mit der Zielokklusion so eng angepasst sind, dass sie nicht auf eine Zahnreihe des unkorrigierten Gebisses gesteckt werden können.

16. Verfahren nach einem der vorstehenden Ansprüche, **dadurch gekennzeichnet, dass** für den Satz neben orthodontischen Drahtbögen (5, Figur 4), welche individuell an das Setup-Modell angepasst sind, auch ein orthodontischer Drahtbogen (Figur 3) ausgewählt wird, welcher dem Setup-Modell nicht individuell angepasst und vorzugsweise weicher als die individuell angepassten Drahtbögen (5, Figur 4) ist.

17. Satz von Vorrichtungen für das Korrigieren einer Malokklusion eines Gebisses, welcher folgende Gegenstände enthält:
Ein Setup-Modell für den Unterkiefer und/oder für den Oberkiefer des zu korrigierenden Gebisses, welches Setup-Modell eine Zielokklusion aufweist;
eine Anzahl von orthodontischen lingualen oder bukkalen Brackets (2);
einen oder mehrere unterschiedliche, an das Setup-Modell angepasste orthodontische Drahtbögen (5);
Drahtbügel (8) für das Herstellen von Übertragungshilfen (7), mit denen die Lingual-Brackets (2) bzw. die bukkalen Brackets an den Zähnen (10) positioniert werden können;
eine oder mehrere unterschiedliche, aus Kunststoff bestehende Korrekturschienen (11), welche an die Gestalt und Stellung der Zähne im Setup-Modell mit der Zielokklusion angepasst und so ausgebildet sind, dass sie nur für eine abschließende Korrektur, nicht aber für den Beginn der Korrektur angewendet werden können.
